# EUROPEAN PATENT APPLICATION

(11) **EP 4 749 981 A2**
(43) Date of publication of application: **27.05.2026**
(21) Application number: 26162344.1
(22) Date of filing: 19.12.2022
(51) Int. Cl.: H04L 9/00

(54) **OUTBOUND - CHEMICAL PRODCUT WITH ENVIRONMENTAL ATTRIBUTES**

(30) Priority: 21.12.2021 EP 21216268; 21.12.2021 EP 21216269; 21.12.2021 EP 21216270; 21.12.2021 EP 21216271; 21.12.2021 EP 21216286; 21.12.2021 EP 21216292; 21.12.2021 EP 21216326; 21.12.2021 EP 21216327; 21.12.2021 EP 21216333; 04.04.2022 EP 22166573; 12.04.2022 EP 22167945; 10.05.2022 EP 22172609; 10.05.2022 EP 22172611; 10.05.2022 EP 22172615; 10.05.2022 EP 22172617; 10.05.2022 EP 22172619; 09.09.2022 EP 22194793; 09.09.2022 EP 22194800; 09.09.2022 EP 22194808; 09.09.2022 EP 22194815; 09.09.2022 EP 22194818; 14.10.2022 EP 22201672; 14.10.2022 US 202263416091 P; 18.10.2022 EP 22202183; 05.12.2022 EP 22211421
(62) Divisional of application: 22835848.7
(71) Applicant: BASF SE, 67056 Ludwigshafen am Rhein (DE)
(72) Inventor: Alba Perez, Ana, 67056 Ludwigshafen am Rhein (DE); Wenzl, Kurt, 67117 Limburgerhof (DE); Grumbrecht, Bastian, 67061 Ludwigshafen am Rhein (DE); Klosterhalfen, Steffen Thomas, SK1 3GG Stockport (DE); Krueger, Christian, 67056 Ludwigshafen am Rhein (DE); Pistillo, Alessandro, 67056 Ludwigshafen am Rhein (DE); Anderlohr, Christopher Alec, 67056 Ludwigshafen am Rhein (DE); Binder, Martin, 67056 Ludwigshafen am Rhein (DE)
(74) Representative: BASF IP Association

(57) **Abstract**

The present disclosure relates to an apparatus for assigning or attributing at least one environmental attribute associated with input material(s) to target material(s) and a computer-implemented method for assigning or attributing at least one environmental attribute associated with input material(s) to target material(s).

## Description

### TECHNICAL FIELD

The present disclosure relates to an apparatus for assigning or attributing at least one environmental attribute associated with input material(s) to target material(s) and a computer-implemented method for assigning or attributing at least one environmental attribute associated with input material(s) to target material(s).

### TECHNICAL BACKGROUND

In supply chains the environmental impact of each supply chain participants is of great interest. Transparency between the participants can aid collective reduction of environmental impacts to combat climate change. However, data sharing of environmental impact data is hindered by the lack of common data standards and the lack of trusted data platforms. In addition, the highly specific and centralized setup of data systems today makes exchange and sharing for collective action laborious. Hence, there is a need to develop metrices quantifying the environmental impact, to simplify data standards relating to environmental impact and to broadly enable a secure exchange of supply chain data relating to the environmental impact.

### SUMMARY OF THE INVENTION

Disclosed is in one aspect a computer-implemented method for assigning or attributing at least one environmental attribute associated with input material(s) to target material(s), wherein the target material(s) are produced by a chemical production network using at least one of the input material(s), the method comprising:
- providing at least one target material identifier associated with the target material(s) and at least one target environmental attribute,
- providing at least one account for balancing environmental attributes and at least one attribution rule for attributing environmental attributes to target material(s), wherein the environmental attributes are associated with the input material(s) and wherein the at least one attribution rule includes instructions determining the at least one environmental attribute(s) accessible for the target material(s) based on the input material(s) used to produce the target material(s), the quantity of the input material(s) used to produce the target material(s), the one or more environmental attribute(s) associated with the input material(s) used to produce the target material(s) or combinations thereof,
- based on the at least one target material identifier and the at least one target environmental attribute selecting at least one of the attribution rules,
- determining via the at least one attribution rule at least one of the accounts for attributing one or more environmental attribute(s) from the at least one account to the at least one target material identifier,
- assigning or attributing the one or more environmental attribute(s) from the at least one account for balancing environmental attributes to the at least one target material identifier.

Disclosed is in another aspect an apparatus configured for assigning or attributing at least one environmental attribute associated with input material(s) to target material(s), wherein the target material(s) are produced by a chemical production network using at least one of the input material(s), the apparatus comprising:
- a target provider configured to provide at least one target material identifier associated with the target material(s) and at least one target environmental attribute,
- a balancing module configured to provide at least one account for balancing environmental attributes,
- an attribution module configured to provide at least one attribution rule for attributing environmental attributes associated with the input material(s) to the target material(s), wherein the at least one attribution rule includes instructions determining the at least one environmental attribute(s) accessible for the target material(s) based on the input material(s) used to produce the target material(s), the quantity of the input material(s) used to produce the target material(s), the one or more environmental attribute(s) associated with the input material(s) used to produce the target material(s) or combinations thereof,
- an outbound allocator configured to
   ∘ select based on the at least one target material identifier and the at least one target environmental attribute at least one of the attribution rules,
   ∘ determine at least one of the accounts for assigning or attributing the one or more environmental attribute(s) from the at least one account to the at least one target material identifier via the at least one attribution rule,
   ∘ assign or attribute the one or more environmental attribute(s) of the input material(s) from the at least one account for balancing the environmental attributes to the at least one target material identifier.

Disclosed is in another aspect a method for providing at least one target material associated with one or more environmental attributes and produced by a chemical production network, the method comprising:
- producing the at least one target material from one or more input material(s) entering the chemical production network,
- assigning or attributing at least one environmental attribute associated with the input material(s) to the target material identifier(s) according to any of the methods disclosed herein, and
- providing the target material in association with the environmental attribute.

Disclosed is in another aspect a method for providing at least one target material associated with one or more environmental attributes and produced by a chemical production network, the method comprising:
- producing the at least one target material from one or more input material(s) entering the chemical production network,
- assigning or attributing at least one environmental attribute associated with the input material(s) to the target material identifier(s) according to any of the methods disclosed herein.

Disclosed is in another aspect an apparatus for providing at least one target material associated with one or more environmental attributes and produced by a chemical production network, the method comprising:
- a chemical production network configured to produce the at least one target material from one or more input material(s) entering the chemical production network,
- an assignor configured to assign at least one environmental attribute associated with the input material(s) to the target material identifier(s) according to any of the methods disclosed herein, and
- a material provider configured to provide the produced target material in association with the environmental attribute.

Disclosed is in another aspect an apparatus for providing at least one target material associated with one or more environmental attributes and produced by a chemical production network, the method comprising:
- a chemical production network configured to produce the at least one target material that from one or more input material(s) entering the chemical production network,
- an assignor configured to assign at least one environmental attribute associated with the input material(s) to the target material identifier(s) according to any of the methods disclosed herein.

In yet another aspect disclosed is a computer element, in particular a computer program product or a computer readable medium, with instructions, which when executed on one or more computing node(s) are configured to carry out the steps of any of the methods disclosed herein. In yet another aspect disclosed is a computer element, in particular a computer program product or a computer readable medium, with instructions, which when executed by a processor cause any of the apparatuses disclosed herein to perform any of the methods disclosed herein.

Disclosed is in yet another aspect the use of one or more target material(s) associated with one or more environmental attribute(s) as provided by any of the methods disclosed herein and/or produced by a chemical production network as provided by any of the methods disclosed herein to produce at least one discrete product or at least one end product associated with the one or more environmental attribute(s). The at least one discrete product or the at least one end product may be an intermediate or end product of a product supply chain. The at least one discrete product or the at least one end product may be based on one or more target material(s). The at least one discrete product or the at least one end product may be produced by discrete manufacturing. Disclosed is in yet another aspect a method for producing at least one discrete product or at least one end product associated with the one or more environmental attribute(s), wherein the target material associated with one or more environmental attribute(s) as provided by any of the methods disclosed herein and/or produced by a chemical production network as provided by any of the methods disclosed herein is provided and/or used to produce the at least one discrete product or at least one end product associated with the one or more environmental attribute(s).

Disclosed is in yet another aspect the use of the one or more environmental attribute(s) assigned to the target material identifier as provided by any of the methods disclosed herein to provide at least one discrete product identifier specifying at least one discrete product or at least one end product identifier relating at least discrete product or at least one end product to the one or more environmental attribute(s). Disclosed is in yet another aspect a method for providing at least one discrete product identifier specifying at least one discrete product or at least one end product identifier relating at least one discrete product or at least one end product identifier associated with at least one end product to the one or more environmental attribute(s), wherein the one or more environmental attribute(s) assigned to the target material identifier as provided by any of the methods disclosed herein are provided and/or used to provide the at least one discrete product identifier relating at least one discrete product to the one or more environmental attribute(s) or at least one end product identifier relating at least one end product to the one or more environmental attribute(s).

### EMBODIMENTS

Any disclosure and embodiments described herein relate to the methods, the apparatuses, the computer elements and uses lined out above or below and vice versa. The benefits provided by any of the embodiments and examples equally apply to all other embodiments and examples and vice versa.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

As used herein "determining" also includes "initiating or causing to determine", "generating" also includes "initiating and/or causing to generate" and "providing" also includes "initiating or causing to determine, generate, select, send and/or receive". "Initiating or causing to perform an action" includes any processing signal that triggers a computing node or device to perform the respective action.

The methods, apparatuses and computer elements disclosed herein provide an efficient way to track environmental attributes in chemical processing and to provide chemical products with positive environmental impact through the value chain.. By using attribution rules environmental attributes associated with input materials can be efficiently attributed to environmental attributes associated with target materials. Specifically for chemical networks that produce more than one target material from more than one input material via interconnected, connected and non-connected production chains, the use of attribution rules allows to reliably adjust the attribution mechanisms in line with the physical setup of the chemical production network. The use of accounts for balancing environmental attributes further allows to abstract the complexity of chemical production networks while still allowing to assign environmental impact to target materials. This way the environmental impact of the produced target material or chemical product can be determined in line with the physical set up of the chemical production network. Moreover, the environmental property of the target materials produced in the chemical production network can be made transparent to customers further processing the target materials. By providing a target material identifier associated with at least one target environmental attribute the environmental attributes may even be adjusted to customer needs.

Assigning or attributing at least one environmental attribute associated with input material(s) to target material(s) may include the linking of an input material identifier or a target material identifier with the environmental attribute. The input material identifier or the target material identifier may be associated with the physical entity of the input material or the target material, respectively. This way the virtual identifier of a material may be uniquely linked to the physical material. Such linking may include a physical or virtual link of identifiers uniquely associated with the physical material. For physical linking a tag or code may be physically connected to the material, e.g. by printing a QR code on the packaging. For virtual linking different identifiers associated with the physical material may be linked. For example, an order number, a batch number, LOT number or a combination thereof may be linked.

The environmental attribute may be a digital asset associated with the input or target material. The environmental attribute may digitally specify the environmental impact of the input material or the target material. The environmental attribute may relate to a renewable, a bio-based and/or a recycled content e.g., of the input material and/or target material. The environmental attribute may include a qualitative data point relating to the type of impact e.g., in view of the input material or the target material. The environmental attribute may specify a type such as recycled, renewable and/or bio-based. The qualitative data point may be converted to a quantitative measure such as environmental units or balancing units. The environmental attribute may include a quantitate data point relating to the type of impact e.g., in view of the input material or the target material, recycled content, renewable content or bio-based content. The environmental attribute may specify recycled, renewable and/or bio-based content. The environmental attribute may include further environmental characteristics of the input or target material.

Environmental attributes may refer to a property or characteristic related to the environmental impact. Such property may be a property or characteristic of the input or target materials. The environmental attribute may indicate an environmental performance of one or more material(s). The environmental attribute may be produced from properties of the input materials, the chemical production network and/or the target materials. The environmental attribute may be associated with the environmental impact of one or more material(s) at any stage during the lifecycle of the material or products made of the material. The stages of the material lifecycle may include the stages of providing raw material, producing products, such as intermediate products or end products, using products, treating end-of-life products, recycling end-of-life products, disposing end-of-life products, reusing components from end-of-life products or any subset of stages. The environmental attribute may be specified or may be produced from any activity of one or more entities participating at any stage of the lifecycle of one or more material(s) or product(s) made of such material(s).

The environmental attribute may include one or more characteristic(s) that are attributable to environmental or sustainability impact of the material or product. The environmental attribute may include environmental, technical, recyclability or circularity or complementary risk characteristics(s) associated with the environmental impact of one or more material(s) or product(s).

Environmental characteristic(s) may specify or quantify ecological criteria associated with the products environmental impact. Environmental characteristic(s) may be or may be produced or derived from measurements taken during the lifecycle of one or more material(s) or product(s). Environmental characteristics may be determined at any stage of the materials or product lifecycle and may characterize the environmental impact of the material or product for such stage or up to such stage. Environmental characteristic(s) may for example include impact categories such as carbon footprint, greenhouse gas emissions or global warming potential, primary energy demand, cumulative energy demand, biotic and abiotic resource consumption, air emissions, stratospheric ozone depletion potential, ozone formation, terrestrial and/or marine acidification, water consumption, water depletion, water availability, water pollution, noise pollution, freshwater and/or marine eutrophication potential, human carcinogenic and/or non-carcinogenic toxicity, photochemical oxidant formation, particulate matter formation, terrestrial, freshwater and/or marine ecotoxicity, ionizing radiation, agricultural and/or urban land occupation, land transformation, land use, indirect land use, deforestation, biodiversity, mineral resource consumption, fossil resource consumption. Environmental characteristic(s) may be calculated from combinations of one of more environmental characteristics. Environmental characteristic(s) may for example include material or product characteristics related to the production of the material or product like renewable, bio based, vegan, halal, kosher, palm oil-free, natural or the like.

Technical characteristic(s) may specify or quantify material or product performance at least indirectly associated with the environmental impact. Technical characteristic(s) may be or may be produced from measurements taken during the lifecycle of one or more material(s) or product(s). Technical characteristics may be determined at any stage of the material or product lifecycle and may characterize the material or product performance for such stage or up to such stage. Technical characteristic(s) may for example include composition data, input in the production process, bill of materials, product or material specification data, product or material component data, product or material safety data, application property data, application instructions or product or material quality data. Technical characteristic(s) may for example include physical, chemical or further properties of the material or product.

Circularity characteristic(s) may specify or quantify the material or product life cycle characteristics associated with circular uses. Circularity characteristic(s) may be or may be produced from measurements taken during the lifecycle of one or more material(s) or product(s). Circularity characteristic(s) may be or may be produced from circular data recorded in one or more prior lifecycle(s) including reuse. Circularity characteristics may be determined at any stage of the material or product lifecycle and may characterize the reuse or recycling performance for such stage or up to such stage. Circularity characteristic(s) may relate to technical, mechanical, chemical and/or biological recycling. Circularity characteristic(s) may for example include recycling data, reuse rate, recycling rate, recycling loops, reuse reused product performance, reused material or product quality or the like. Further circularity material characteristics may be derived by combining circularity characteristic(s).

Recyclability characteristic(s) may specify or quantify the material or product life cycle characteristics associated with recycling uses. Recyclability characteristic(s) may include the composition of the material including specifically tailored constituents making the material suitable for recycling. Recyclability characteristic(s) may be or may be produced from measurements taken during the lifecycle of one or more materials or product(s). Recyclability characteristic(s) may be or may be produced from recycling data recorded in one or more prior lifecycle(s). Recyclability characteristics may be determined at any stage of the material or product lifecycle and may characterize the recycling performance for such stage or up to such stage. Recyclability characteristic(s) may for example include recycling data, recyclability data, efficiency of recycling or the like.

Complementary risk characteristic(s) may specify or quantify characteristics associated with further sustainability related risks associated with the product at all stages. Complementary risk characteristic(s) may include the compliance with laws and/or voluntary standards, compliance with human rights declaration, reporting of sustainability development goals or the like. Complementary risk characteristic(s) may include material price variation, supply risks, obsolescence risk, food-contact compatibility or the like.

Target, output or input material(s) may include or be any material produced by the chemical production network using at least one input material. The target material may comprise or be any target material produced by the chemical production network and provided at any exit point of the chemical production network. The input material may comprise or be any input material entering the chemical production network and provided at any entry point of the chemical production network. The target or output material may be produced from input materials by the chemical production network. The target or output material may comprise any material leaving the system boundary of the chemical production network. The input material may be any material entering the system boundary of the chemical production network. The product may be a discrete product produced from the target or output material. The product may be an intermediate or end product produced from the target or output material.

The material may comprise any chemical product obtained from chemical processes. The material may be obtained by mixing, separating, chemical reaction or natural reaction of chemical substances. The material may be a raw material fed to the chemical production network, an educt to a chemical process, an intermediate in a chemical process or a product of a chemical product. The material may be obtained from chemical reactions as well as natural chemical products. Natural chemical products may encompass any chemical substance that is naturally occurring, i.e. any unprocessed chemical substance that is found in nature, such as chemicals from plants, micro-organisms, animals, the earth and the sea or any chemical substance that is found in nature and extracted using a process that does not change its chemical composition. Natural chemical products may include biologicals like enzymes as well naturally occurring inorganic or organic chemical products. Natural chemical products can be isolated and purified prior to their use or they can be used in unisolated and/or unpurified form. Chemical products obtained from chemical reactions may be any inorganic or organic chemical product obtained by reacting inorganic and/or organic chemical reactants. The inorganic and organic chemical reactants may be naturally occurring chemical products or can be chemical products obtained from chemical reactions. Chemical reactions may include any chemical reaction commonly known in the state of the art in which the reactants are converted to one or more different chemical products. Chemical reactions may involve the use of catalysts, enzymes, bacteria, etc. to achieve the chemical reaction between the reactants.

Chemical production networks may include multiple types of production processes for producing different target materials from input materials. The chemical production network may include a complex production network producing multiple target materials in multiple value or production chains. The production or value chain may include one or more process(es) configured to produce one chemical product or chemical product class from one or more input material(s). The chemical production network may include multiple production steps per production chain. The chemical production network may include connected, interconnected and/or non-connected production chains. The chemical production network may produce from input materials multiple intermediates and from intermediates target materials. Input material may enter the chemical production network at entry points. Target material may leave the production network at exit points.

The chemical production network may include identity preserving or segregated production chains. Identity preserving or segregated in this context may refer to the environmental attributes of the input materials being preserved or segregated in the production chains. Examples are renewable or recycled input materials used to produce the target material without fossil content. Further examples are fossil input materials used to produce the target material with fossil content. Chemical production networks may include non-identity preserving or non-segregated production chains. Non-identity preserving or non-segregated in this context may refer to the environmental attributes of the input materials being mixed in the production chains. For example, non-identity preserving or non-segregated in this context refers to the environmental attributes of the input materials being mixed with fossil input materials in the production chains. Examples are fossil and renewable input materials mixed to produce the target material with fossil and renewable content.

The chemical production network may include multiple production steps for one or more production chains. The production steps included in the chemical network may be defined by the physical system boundary of the chemical production network. The system boundary may be defined by location or control over production processes. The system boundary may be defined by the site of the chemical production network. The system boundary may be defined by production processes controlled by one entity or multiple entities jointly. The system boundary may be defined by value chain with staggered production processes to an end product, which may be controlled by multiple entities separately. The chemical production network may include a waste collection step, a waste sorting step, a recycling step such as pyrolysis, a cracking step such as steam cracking, a separation step to separate outputs of one process step and further processing steps to convert such outputs to target materials leaving the system boundary of the chemical production network. The entry points of the chemical production network may be marked by the entry of input materials to the chemical production network. The input materials entering the chemical production network may be used to produce one or more target materials. The target materials may leave the physical system boundary of the chemical production network. The exit points of the chemical production network may be marked by the exit of target materials from the chemical production network. The chemical production network may comprise one or more entry points at which input materials are provided to the chemical production network. Input material may include fossil material, non-fossil material or both.

The account for balancing environmental attributes may refer to a digital storage structure that stores data related to environmental attributes. The account may be associated with meta data identifying the account for balancing environmental attributes. The account may be associated with meta data identifying the environmental attributes and the environmental units attributed to the account. The account may be associated with meta data identifying the production chain the account is associated with. The account may be associated with meta data identifying the input or target material the account is associated with. The account may be part of a balancing system including multiple accounts. The account may hold environmental attributes for transaction. Environmental attributes may be attributed, added, deleted, withdrawn or deducted from the account.

The at least one attribution rule may specify the attribution scheme associated with the account for balancing environmental attributes. The at least one attribution rule may specify the attribution of environmental attributes associated with input materials and the chemical production network to environmental attributes associated with target materials. The at least one attribution rule may depend on a target material identifier and an environmental attribute. The at least one attribution rule may include instructions for attributing environmental attributes from input materials to at least one account for balancing environmental attributes. The at least one attribution rule may include instructions for deducting environmental attributes from at least one account for balancing environmental attributes. The at least one attribution rule may include instructions for attributing environmental attributes from the account to target materials or target material identifiers.

A target material and its associated target material identifier may refer to the target material to be produced. The target material and associated target environmental attributes may be customer specific. The target material and associated target environmental attributes may be tailored to customer requirements. Customer requirements may relate to products produced from the target material. The target material and associated target environmental attributes may specify a customer-specific target material and/or customer specific environmental attributes.

The target environmental attribute may include one or more environmental attributes relating to one or more environmental attribute type(s). The target environmental attribute may include environmental attributes relating to different environmental attribute type(s). The target environmental attribute may include environmental units associated with one or more environmental attribute types. The environmental attribute type may refer to recycled, bio-based, renewable or combinations thereof.

In one embodiment the account for balancing environmental attributes is associated with account metadata relating to at least one environmental attribute type, at least one chemical production network, at least one production chain of the chemical production network, at least one attribution scheme, at least one input material type, at least one target material type or combinations thereof. The input material type may relate to characteristics of input material such as recycled material, biobased material or renewable material. The input material type may relate to the material and its use or entry points such as pyrolysis oil for input to a steam cracker or syngas plant, bio-gas for input to a steam cracker or syngas plant. The input material type may relate to the geographic origin of the input material. The input material type may relate to the production process of the input material, such as mechanically or chemically recycled material.

The account for balancing environmental attributes may be associated with environmental attribute types that relate to certified or non-certified environmental attributes. The account for balancing environmental attributes may be associated with environmental attribute types that relate to input material dependent environmental attributes. The account for balancing environmental attributes may be associated with environmental attribute types that relate to chemical network or production chain dependent environmental attributes. The account for balancing environmental attributes may be associated with environmental attribute types that relate to target material dependent environmental attributes. The account for balancing environmental attributes may be associated with environmental attribute types that relate to environmental attributes certified under specific certification schemes. The account for balancing environmental attributes may be associated with environmental attribute types that relate to environmental attributes adhering to specific attribution schemes. The attribution scheme may for instance relate to physical and/or chemical traceability of the environmental attribute with respect to material flows of the chemical production network.

The account for balancing environmental attributes may be associated with at least one chemical production network producing the target or target material. The account for balancing environmental attributes may be associated with at least one chemical production network including one or more production chains. The account for balancing environmental attributes may be associated with at least one chemical production network including one or more process steps converting input material(s) to one or more intermediate(s) and/or one or more target material(s). The account for balancing environmental attributes may be associated with at least one chemical process setup of the chemical production network. For example, if more than one chemical process setup exists to produce one or more target material(s). Such setups may differ in environmental attributes associated with the process setup. The account may specify such chemical process setup.

The account for balancing environmental attributes may be associated with at least one attribution scheme specifying the balancing or environmental attributes. The account for balancing environmental attributes may be associated with at least one segregated and/or non-segregated attribution scheme. The account for balancing environmental attributes may be associated with one or more non-segregated attribution schemes, such as a mass balance scheme with free attribution, a mass balance scheme without free attribution or a book-and-claim scheme.

The account for balancing environmental attributes may be associated with at least one input material characterized by at least one environmental attribute type. The account for balancing environmental attributes may be associated with at least one input material type entering the chemical production network. The account for balancing environmental attributes may be associated with at least one input material type used to produce one or more target material(s).

The account for balancing environmental attributes may be associated with at least one target material characterized by at least one environmental attribute type. The account for balancing environmental attributes may be associated with at least one target material type exiting the chemical production network. The account for balancing environmental attributes may be associated with at least one target material type produced from one or more input material(s).

In another embodiment the at least one attribution rule depends on a target material type and an environmental attribute type, wherein at least one account for assigning or attributing environmental attributes and environmental units to be transacted from the respective account to the target material identifier are determined via the at least one attribution rule.

In another embodiment the at least one attribution rule is associated with account metadata relating to at least one environmental attribute type, at least one chemical production network, at least one production chain of the chemical production network, at least one attribution scheme, at least one input material type, at least one target material type or combinations thereof. The input material type may relate to characteristics of input material such as recycled material, biobased material or renewable material. The input material type may relate to the material and its use or entry points such as pyrolysis oil for input to a steam cracker or syngas plant, bio-gas for input to a steam cracker or syngas plant. The input material type may relate to the geographic origin of the input material. The input material type may relate to the production process of the input material, such as mechanically or chemically recycled material.

The at least one attribution rule may be associated with environmental attribute types that relate to certified or non-certified environmental attributes. The at least one attribution rule may be associated with environmental attribute types that relate to input material dependent environmental attributes. The at least one attribution rule may be associated with environmental attribute types that relate to chemical network or production chain dependent environmental attributes. The at least one attribution rule may be associated with environmental attribute types that relate to target material dependent environmental attributes. The at least one attribution rule may be associated with environmental attribute types that relate to certified or non-certified environmental attributes. The at least one attribution rule may be associated with environmental attribute types that relate to environmental attributes certified under specific certification schemes. The at least one attribution rule may be associated with environmental attribute types that relate to environmental attributes adhering to specific attribution schemes.

The at least one attribution rule may be associated with at least one chemical production network producing the target or target material. The at least one attribution rule may be associated with at least one chemical production network including one or more production chains. The at least one attribution rule may be associated with at least one chemical production network including one or more process steps converting input material(s) to one or more intermediate(s) and/or one or more target material(s). The at least one attribution rule may be associated with at least one process setup of the chemical production network.

The at least one attribution rule may be associated with at least one attribution scheme specifying the balancing or environmental attributes. The at least one attribution rule may be associated with at least one segregated or non-segregated attribution scheme. The at least one attribution rule may be associated with at least one non-segregated attribution scheme. The at least one attribution rule may be associated with one or more non-segregated attribution schemes, such as a mass balance scheme with free attribution, a mass balance scheme without free attribution or a book-and-claim scheme.

The at least one attribution rule may be associated with at least one input material characterized by at least one environmental attribute type. The at least one attribution rule may be associated with at least one input material entering the chemical production network. The at least one attribution rule may be associated with at least one input material used to produce one or more target material(s).

The at least one attribution rule may be associated with at least one target material characterized by at least one environmental attribute type. The at least one attribution rule may be associated with at least one target material type exiting the chemical production network. The at least one attribution rule may be associated with at least one target material type produced from one or more input material(s).

The account for balancing environmental attributes and the at least one attribution rule may be associated at least in part with corresponding metadata. The account for balancing environmental attributes and the at least one attribution rule may be associated with corresponding metadata. The account for balancing environmental attributes and the at least one attribution rule may be associated with partially corresponding metadata. The set of metadata associated with the account for balancing environmental attributes and the at least one attribution rule may match in all data points of the meta data. The set of metadata associated with the account for balancing environmental attributes and the at least one attribution rule may relate to at least one environmental attribute type, at least one chemical production network, at least one production chain, at least one attribution scheme, at least one input material type, at least one target material type or combinations thereof. The input material type may relate to characteristics of input material such as recycled material, biobased material or renewable material. The input material type may relate to the material and its use or entry points such as pyrolysis oil for input to a steam cracker or syngas plant, bio-gas for input to a steam cracker or syngas plant. The input material type may relate to the geographic origin of the input material.

The input material type may relate to the production process of the input material, such as mechanically or chemically recycled material.

In another embodiment the attribution rule includes instructions to determine one or more account(s) accessible for the at least one target material. The at least one attribution rule may include instructions to determine one or more account(s) accessible for the at least one target material and/or the environmental units accessible for the at least one target material. The attribution rule may be associated with metadata signifying the one or more account(s) accessible for the at least one target material. The attribution rule may include instructions to determine the one or more account(s) accessible for the at least one target material. The attribution rule may include instructions to verify or validate the one or more account(s) accessible for the at least one target material. The attribution rule may include instructions to determine, verify and/or validate the one or more account(s) accessible for the at least one target material.

For determination of the one or more account(s) accessible for the at least one target material, the attribution rule may be associated with the target material.

The attribution rule may include instructions to determine the input material(s) used to produce the target material. The attribution rule may include instructions to access a bill of material comprising input material data, target material data and process data. From the bill of material, the environmental attribute types accessible for the at least one target material may be determined. From the environmental attribute types, the one or more account(s) accessible for the at least one target material may be determined.

The attribution rule may include instructions to match the metadata of the accounts with the target material type corresponding to the target material. For determination of the one or more account(s) accessible for the at least one target material, the attribution rule may be associated with the production chain. The attribution rule may include instructions to match the metadata of the accounts with the production chain. Such metadata matching may be executed for any combination of metadata associated to the account(s) and attribution rules as lined out above.

For verification of the one or more account(s) accessible for the at least one target material, the attribution rule may be associated with the target material type and one or more account(s). On verification the one or more account(s) accessible for the at least one target material may be determined and compared to the one or more account(s) associated with the attribution rule.

For validation of the one or more account(s) accessible for the at least one target material, the attribution rule may be associated with the target material type and one or more account(s). On validation the metadata and/or the balance of the one or more account(s) accessible for the at least one target material may be checked to be validly accessible.

In another embodiment the attribution rule includes instructions determining a validity date of the environmental attribute(s) to be attributed to the target material. On providing the input material(s) the environmental attribute(s) may be registered to the account for balancing environmental attributes. The environmental attribute(s) may be provided in association with a validity date. The environmental attribute(s) may be provided in association with the validity date and an input material identifier. Based on the validity date the environmental attribute(s) to be attributed to the target material identifier may be selected. The environmental attribute(s) associated with a valid validity date and/or the oldest validity date may be attributed to the target material identifier. By selecting the environmental attributes based on validity date, environmental attributes can be effectively managed.

In another embodiment the attribution rule relates to the environmental units accessible for the at least one target material. The attribution rule may be associated with metadata signifying the environmental units accessible for the at least one target material. The attribution rule may include instructions to determine the environmental units accessible for the at least one target material. The attribution rule may include instructions to verify or validate the environmental units accessible for the at least one target material. The attribution rule may include instructions to determine, verify and/or validate the environmental units accessible for the at least one target material.

For determination of the environmental units accessible for the at least one target material, the attribution rule may be associated with the target material type.

The attribution rule may include instructions to determine the input material(s) or the quantity of input material(s) used to produce the target material. The attribution rule may include instructions to access a bill of material comprising input material data, target material data and process data. From the bill of material, the environmental units accessible for the at least one target material may be determined. From the bill of material, the type of environmental attributes and the environmental units accessible for the at least one target material may be determined. For such determination the quantity of input material(s) used to produce the target material may be determined. The quantity of input material(s) used to produce the target material may be converted to equivalent environmental attributes. The environmental units may relate to equivalent environmental attributes. The maximum environmental units accessible for the at least one target material may be determined for one or more environmental attribute type(s).

The quantity of input material(s) may include the mass, weight, molecular weight, volume, energy equivalent, e.g. Lower Heating Value (LHV) or Higher Heating Value (HHV), atom equivalents, e.g. methane, carbon, hydrogen equivalents. The quantity of input material(s) may relate to the amount of input material(s).

The attribution rule may include instructions to match the metadata of the accounts with the target material corresponding to the target material and determine an account balance. For determination of the one or more account(s) accessible for the at least one target material, the attribution rule may be associated with the production chain. The attribution rule may include instructions to match the metadata of the accounts with the production chain and provide respective account balance. Such metadata matching may be executed for any combination of metadata associated to the account(s) and attribution rules as lined out above.

For verification of the one or more account(s) accessible for the at least one target material, the attribution rule may be associated with the target material type and one or more account(s). On verification the one or more account(s) accessible for the at least one target material may be determined, compared to the one or more account(s) associated with the attribution rule and the respective account balance may be provided.

For validation of the one or more account(s) accessible for the at least one target material, the attribution rule may be associated with the target material type and one or more account(s). On validation the metadata and/or the balance of the one or more account(s) accessible for the at least one target material may be checked to be validly accessible by matching metadata.

In another embodiment the attribution rule includes instructions to determine based on the at least one target material respective input material(s) used to produce the target material and accessible environmental attributes associated with respective input material(s). The attribution rule may include instructions to determine based on the at least one target material type input material(s) used to produce the target material and accessible environmental attributes associated with respective input material(s). The attribution rule may include determining based on the at least one target material type respective input material(s) from the bill of materials. The determination from the bill of materials may include deriving from process data indicating the process steps of the chemical production network and/or the process step chain leading from the input material(s) to the target material and determining the input material data including input material identifier(s) and respective input material quantity.

In another embodiment input material(s) used to produce the target material include input material(s) associated with environmental attributes at the entry to the chemical production network, wherein the respective environmental attributes are decoupled from the material flow by attribution to the account for balancing respective environmental attributes. Input material(s) used to produce the target material may include input material(s) associated with environmental attribute(s) and input material(s) not associated with environmental attribute(s). The environmental attribute(s) may be decoupled from the material flow through the chemical production network by attribution to the account for balancing respective environmental attributes.
Input material(s) used to produce the target material may include input material(s) provided at entry points to the chemical production network. The entry points to the chemical production network may signify any point of input material(s) entering the physical boundary of the chemical production network. Upon entry material data related to the one or more input material(s) and respective environmental attributes may be provided to a computing interface. The material data may include at least one material identifier and at least one environmental attribute. The material data may further include a quantity of input material provided. The at least one environmental attribute may be attributed to the account for balancing the respective environmental attribute based on the quantity of input material. This way the material flow of the input material(s) through the chemical production network may be decoupled from the environmental attributes and the environmental attributes may be attributed to target material according to the attribution rule.

In another embodiment the account includes environmental attributes attributed to the account on entry of input material(s) associated with environmental attributes to the chemical production network or on providing input material(s) associated with environmental attributes to an entry point of the chemical production network. On entry of the input material(s) associated with at least one environmental attribute, the at least one environmental attribute may be registered in the account associated with the environmental attribute type. Metadata associated with the input material may relate to at least one environmental attribute type, at least one chemical production network, at least one production chain, at least one attribution scheme, at least one input material type, at least one target material type or combinations thereof. By matching the meta data associated with the input material with the respective account, the environmental attribute(s) associated with the input material may be attributed to the respective account. The account for balancing environmental attributes and the input material may be associated at least in part with corresponding metadata. The account for balancing environmental attributes and input material may be associated with corresponding metadata. The account for balancing environmental attributes and the input material may be associated with partially corresponding metadata. The set of metadata associated with the account for balancing environmental attributes and the input material may match in all data points of the meta data. The set of metadata associated with the account for balancing environmental attributes and the input material may relate to at least one environmental attribute type, at least one chemical production network, at least one production chain, at least one attribution scheme, at least one input material type, at least one target material type or combinations thereof.

In another embodiment the attribution rule includes instructions determining the environmental attributes accessible for the at least one target material based on input material(s) used to produce the target material, the quantity of input material used to produce the target material, the environmental attributes associated with input material(s) used to produce the target material or combinations thereof.

In another embodiment the attribution rule includes instructions determining at least one combination of accounts and the respective environmental units to reach the target environmental attribute. More than one combination of accounts and respective environmental units may be determined to reach the target environmental attribute(s). If more than one combination of accounts and respective environmental units is determined, one combination may be selected based on account balances, number of accounts included in the combination, match of the total environmental attribute(s) included in the combination to the target environmental attribute(s) or combinations thereof.

In another embodiment the attribution rule includes instructions determining a combination of accounts with compatible attribution schemes e.g. to reach the target environmental attribute(s). The compatibility may be based on the certification scheme. For instance a first certification scheme may or may not allow to attribute environmental attributes associated with a second certification scheme. The determination if attribution schemes are compatible may include matching of metadata associated with the attribution scheme of the account and the attribution scheme associated with the target material or the respective target environmental attribute.

### BRIEF DESCRIPTION OF THE DRAWINGS

- Figure 1: illustrates an example of a chemical production network producing one or more output material(s) from one or more input material(s) in connection with an operating system including an attribute management system.
- Figures 2a-c: illustrate a part of a chemical production network producing multiple output material(s) from fossil and non-fossil input material(s).
- Figures 3a-c: illustrate examples of attribution schemes attributing the use of renewable or bio-based input materials to output materials of the chemical production network.
- Figure 4: illustrates an example of a chemical production network with different attribution schemes.
- Figures 5a,b: illustrate inbound and outbound attribution of environmental attributes for a chemical production network.
- Figures 6: illustrate an example of a method for attributing or allocating at least one environmental attribute to a balancing account based on an attribution rule.
- Figures 7: illustrate examples of attribution rules for attributing or allocating at least one environmental attribute to a balancing account.
- Figures 8: illustrate an example of a method for assigning or attributing at least one environmental attribute to a target material id based on an attribution rule.
- Figures 9: illustrate examples of attribution rules for assigning or attributing at least one environmental attribute to a target material id based on an attribution rule.
- Figure 10: illustrate examples of attribution rule instructions for selecting at least one account.
- Figure 11: illustrate examples of attribution rule instructions for compatibility check of accounts.
- Figures 12: illustrate an example of a method for producing at least one output material associated with at least one environmental attribute in a supply chain.

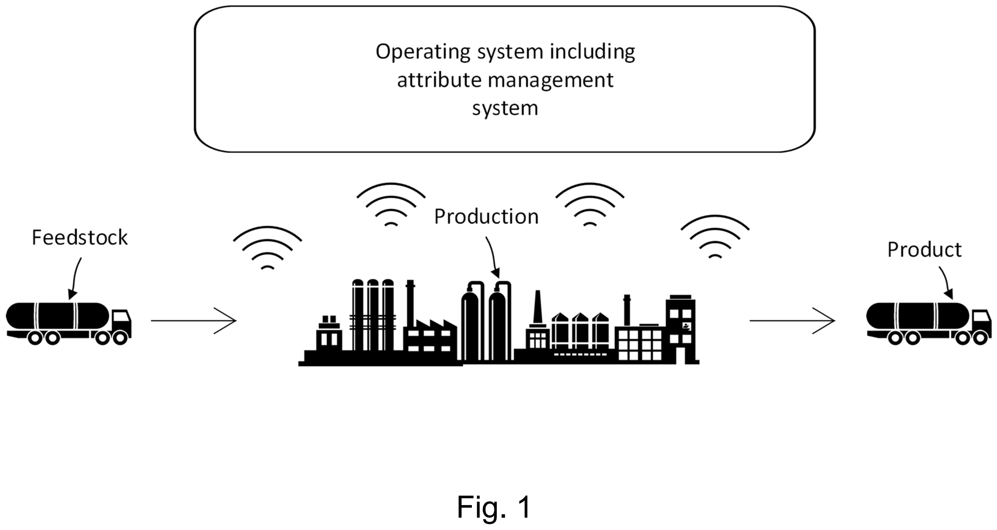

Fig. 1 illustrates an example of a chemical production network producing one or more output material(s) from one or more input material(s) in connection with an operating system including an attribute management system.

For producing one or more output product(s) different input materials may be provided as physical inputs from material providers or suppliers. The input or output materials may have one or more properties related to environmental impact of the input or output products.

The chemical production network may include multiple interlinked processing steps. The chemical production network may be an integrated chemical production network with interrelated production chains. The chemical production network may include multiple different production chains that have at least one intermediate product in common. The chemical production network may include multiple stages of the chemical value chain. The chemical production network may include the producing, refining, processing and/or purification of gas or crude oil. The chemical production network may include a stream cracker, or a syngas plant connected to multiple production chains that output chemical products from the effluent of such plants. The chemical production network may include multiple production chains that output from one or more input material(s) as input chemical products as output. The chemical production network may include multiple tiers of a chemical value chain. The chemical production network may include a physically interconnected arrangement of production sites. The production sites may be at the same location or at different locations. In the latter case the production sites may be interconnected by means of dedicated transportation systems such as pipelines, supply chain vehicles, like trucks, supply chain ships or other cargo transportation means.

The chemical production network may chemically convert input materials to one or more output materials. The chemical production network may convert input materials by way of chemical conversion to one or more output materials. The input materials may be considered input materials for the chemical production network.

The input materials may be fed into the chemical production network at any entry point. The input materials may be fed into the chemical production network at the start of the chemical production network. Input materials may for example make up the feedstock of a steam cracker. The input material may include a bio-based, a recycled and/or a fossil input material for the manufacture of chemical intermediates and chemical products.

The chemical production network may include multiple production steps. The production steps included in the chemical network may be defined by the system boundary of the chemical production network. The system boundary may be defined by location or control over production processes. The system boundary may be defined by the site of the chemical production network. The system boundary may be defined by production processes controlled by one entity or multiple entities jointly. The system boundary may be defined by value chain with staggered production processes to an end product, which may be controlled by multiple entities separately. The chemical production network may include a waste collection and sorting step, a recycling step such as pyrolysis, a cracking step such as steam cracking, a separation step to separate outputs of one process step and further processing steps to convert such outputs to a chemical product leaving the system boundary of the chemical production network.

The operating system of the chemical production network may monitor and/or control the chemical production network based on operating parameters of the different processes. One process step monitored and/or controlled may be the feed of input materials or the release of output materials. Another process step monitored and/or controlled may the attribution of environmental attributes to chemical products produced via the chemical production network. Yet another process step monitored and/or controlled may be the registration of environmental attributes associated with input materials entering the system boundary of the chemical production network. Yet another process step monitored and/or controlled may be the management of environmental attributes associated with input materials and chemical products of the chemical production network.

The operating system may be configured to access data related the inputs materials, the processes and/or the output materials. The operating system may be configured to convert a recycled or bio-based content of the one or more input material(s) used in the chemical production network to environmental units. The operating system may be configured to allocate the environmental units to at least one balancing account associated with the recycled or bio-based content of the input materials. The operating system may be configured to allocate at least a part of the environmental units from the at least one balancing account to the at least one chemical product.

The operating system may be configured to handle environmental units related to the input and output materials of the chemical production network. In particular, the operating system may be configured to determine environmental units associated with the use of input materials impacting the environmental property of the chemical production network and the output materials produced by the chemical production network. Further in particular, the operating system may be configured to determine environmental units associated with the output materials and the environmental property of the output materials. This way the operating system may be configured to store environmental units in balancing accounts or to delete environmental units from the balancing accounts. The environmental units may be viewed as a credit that may be deposited in an account or deducted from an account related to the input and output materials of the chemical production network.

The operating system may be configured to register inbound environmental attributes, to assign outbound environmental attributes and to manage inbound registration as well as outbound assignment via attribution rules.

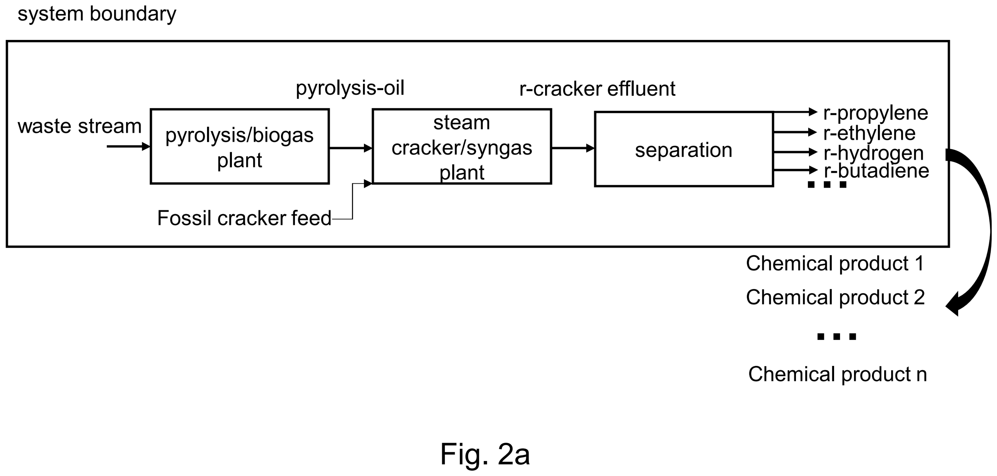

Figs. 2a-c illustrate a part of a chemical production network producing multiple output material(s) from fossil and non-fossil input material(s).

The chemical production network may comprise a pyrolysis unit for pyrolysis of recycled waste. A recycled waste stream may feed the pyrolysis unit. Waste stream may include plastics, rubber (including tires), textiles, wood, biowaste, modified celluloses, wet laid products, and any other material suitable for pyrolysis. The waste stream may include a stream containing at least in part post-industrial, or post-consumer, or both post-industrial and post-consumer materials. A post-consumer material is one that has been used at least once for its intended application for any duration of time regardless of wear, or has been sold to an end use customer, or which is discarded into a recycle bin by any person or entity other than a manufacturer or business engaged in the manufacture or sale of the material. A post-industrial material is one that has been created and has not been used for its intended application, or has not been sold to the end use customer, or discarded by a manufacturer or any other entity engaged in the sale of the material. Examples of post-industrial materials include rework, regrind, scrap, trim, out of specification materials, and finished materials transferred from a manufacturer to any downstream customer (e.g. manufacturer to wholesaler to distributor) but not yet used or sold to the end use customer. The waste stream may be isolated as one type of waste stream with specific waste material or it may be a stream of mixed wastes.

Examples of plastics as a waste stream include high density polyethylene and copolymers thereof, low density polyethylene and copolymers thereof, polypropylene and copolymers thereof, other polyolefins, polystyrene, polyvinyl chloride (PVC), polyvinylidene chloride (PVDC), polyesters including polyethylene terephthalate, copolyesters and terephthalate copolyesters (e.g. containing residues of 2,2,4,4-tetramethyl-1 ,3-cyclobutanediol, CHDM cyclohexane dimethanol, neopentyl glycol monomers, , propylene glycol), polyethylene terephthalate, polyamides, poly(methyl methacrylate), polytetrafluoroethylene, acrylonitrile butadiene styrene (ABS), polyurethanes, cellulosics and derivates thereof such as cellulose acetate, cellulose diacetate, cellulose triacetate, cellulose propionate, cellulose butyrate; regenerated cellulosics such as viscose and rayons, epoxy, polyamides, phenolic resins, polyacetal, polycarbonates, polyphenylene-based alloys, polypropylene and copolymers thereof, polystyrene, styrenic compounds, vinyl based compounds, styrene acrylonitrile, thermoplastic elastomers, and urea based polymers and melamine containing polymers.

The waste stream may be fed to a pyrolysis unit. The pyrolysis effluent exiting the pyrolysis unit may comprise pyrolysis oil, pyrolysis gas, and residual solids. The pyrolysis oil may be used as feedstock for a cracker or a syngas plant. The pyrolysis oil may be fed to the cracker as recycled feedstock together with a non-recycle or conventional feedstock (e.g., naphtha). In addition to the recycled feedstock bio-based feedstock may be fed to the cracker. **In** further embodiments pyrolysis wax, pyrolysis gas, pyrolysis char, or synthesis gas may be provided to as feedstock. In yet further embodiments bio-naphtha may be produced through hydrogenation of bio-based material such palm oil and tallow and provided as feedstock to the cracker.

A recycled and/or bio-based content cracked effluent may be produced from the cracker and then subjected to separation in a separation train. In an embodiment or in combination with any embodiment mentioned herein, the recycled or bio-based content composition can be separated and different product streams containing recycled or bio-based content may be recovered from the recycled or bio-based content cracked effluent. For instance, a propylene stream containing recycled or bio-based content may contain predominantly propylene, or an ethylene stream containing recycled or bio-based content may contain predominately ethylene. The product stream containing recycled or bio-based content may be further processed to output products or end products.

**In** one embodiment or in combination with any of the mentioned embodiments, the "r-ethylene" (recycle content ethylene) can be a composition comprising: (a) ethylene obtained from cracking of a cracker feed containing pyrolysis oil, or (b) ethylene having a recycle content value attributed to at least a portion of the ethylene; and the "r- propylene" (recycle content propylene) can be a composition comprising (a) propylene obtained from cracking of a cracker feed containing pyrolysis oil, or (b) propylene having a recycle content value attributed to at least a portion of the propylene. Both, r-ethylene and r-propylene can be summarized under the term r-olefin (recycle content olefin).

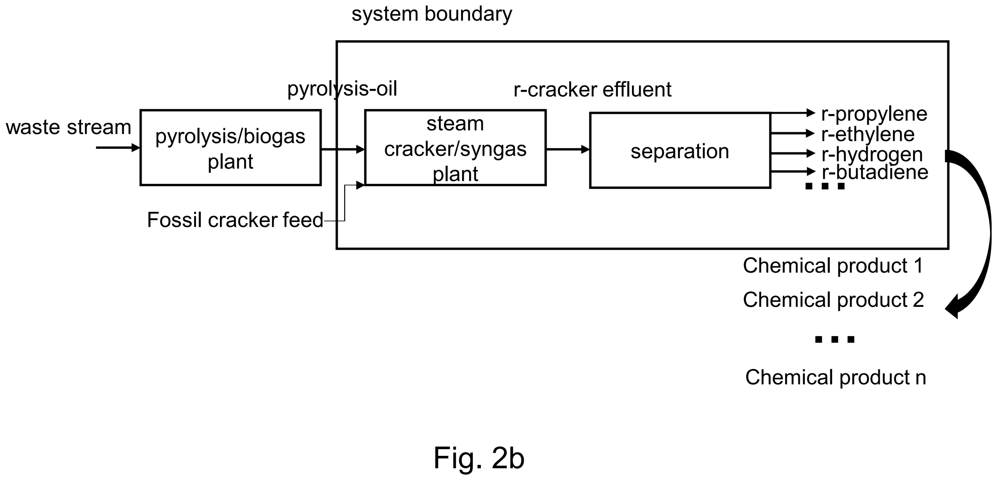

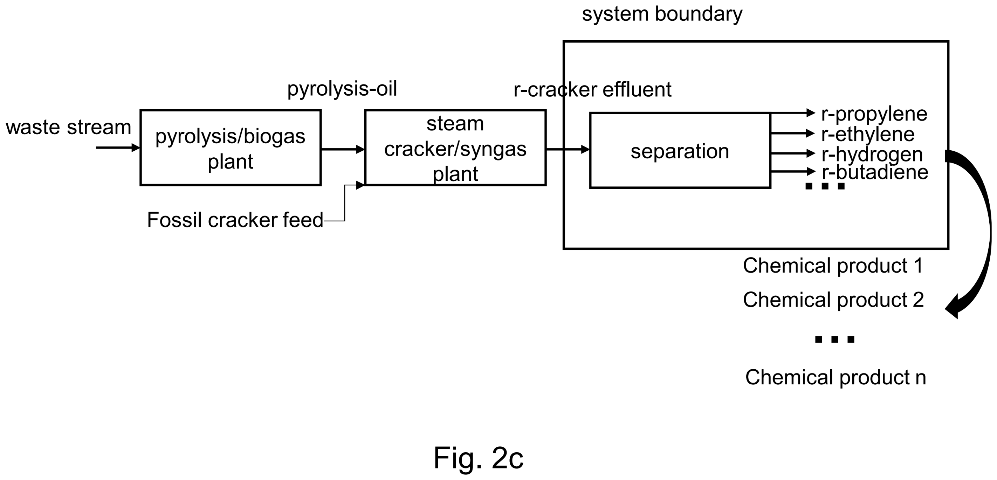

Fig. 2a illustrates an embodiment for a system boundary of the chemical production network, which includes the pyrolysis step. The waste stream forms the entry point into the chemical production network. The chemical end products form the exit point out of the chemical production network. Fig. 2b illustrates another embodiment for the system boundary of the chemical production network, which excludes the pyrolysis step. The pyrolysis oil and the fossil feed form the entry point into the chemical production network. The chemical end products form the exit point out of the chemical production network. Fig. 2c illustrates another embodiment for the system boundary of the chemical production network, which excludes the pyrolysis step and the cracking step. The cracker effluent produced at least in part from pyrolysis oil forms the entry point into the chemical production network. The chemical end products form the exit point out of the chemical production network. The chemical production networks and the system boundaries illustrated in Figs. 2a to 2c are examples and should not be considered limiting.

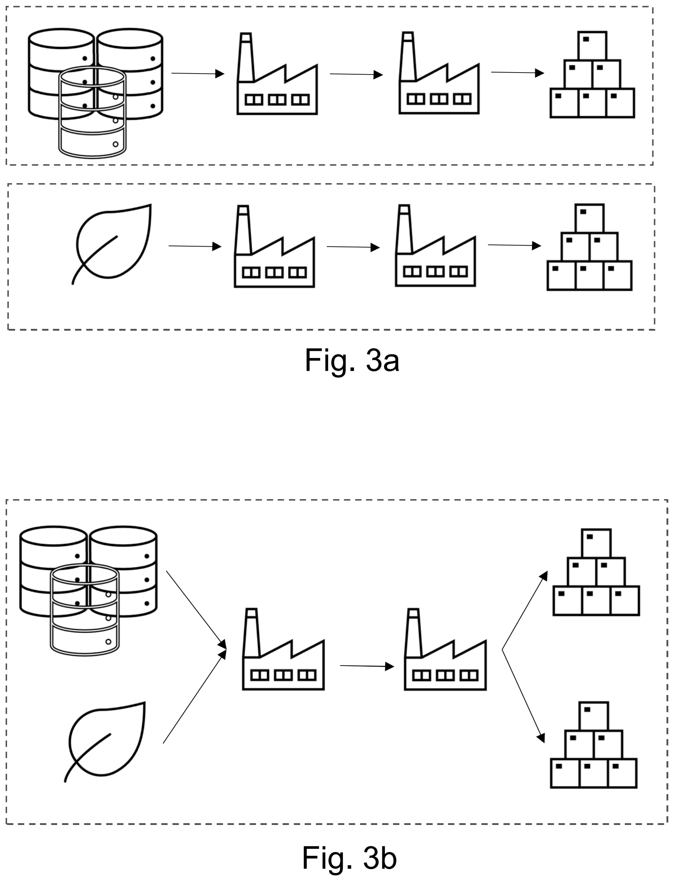

Figs. 3a to c illustrate examples of attribution schemes attributing the use of renewable or bio-based input materials to output materials of the chemical production network.

As illustrated in Figs. 1 and 2 chemical production networks can comprise complex interconnected production sites that chemically convert one or more input materials via chemical processing to one or more output materials. To account for the use of recycled or renewable content in chemical production, attribution rules may be used. This way recycled, renewable or biobased content of input materials may be attributed to output materials. The renewable content may be based on input material from renewable sources. The renewable content may comprise bio-based input materials produced from living organisms such as different types of crops, wood or algae. The recycled content may comprise any recycled material used in production of new materials. This may include any recycled bio-based or bio-based materials e.g. as produced from chemical or mechanical recycling.

Accounting principles for attributing the use of recycled or renewable content are for example defined in ISO 22095. Four different models may be used: Identity preservation models, segregated models, mass balance models, or book and claim models.

Fig. 3a illustrates an example of a dedicated or segregated production network. The production network comprises a first production chain for producing the output material from fossil material and a second production chain for producing the output material from bio-based input materials. The first and the second production chain are not interconnected. The first and the second production chain produce a fossil-based and a bio-based output material, respectively. Example for such dedicated production environments include fermentation or chemical transformation, such as polyethylene production from sugar cane, biopoly lactic acid (PLA) production from corn, bio-succinic acid, or bio-butanediol (BDO).

Fig. 3b illustrates an example of a complex production network. In contrast to the production network of Fig. 3a the fossil-based input materials are co-fed and mixed with bio-based input materials. The production network produces via one or more chemical process chains with intermediates one or more material outputs or products. For the sake of simplicity Fig. 3b illustrates the mass balancing approach for one chemical process chain producing one output material or product. In the mass balancing model, the physical mixing or co-feeding of bio-based input material with conventional fossil input materials is accounted for. Here the feed into the production network and the feed of output products form a system boundary. The mass balance of input and output materials connect the used bio-based input material to the produced output product. Mass balance allows to keep track of the total quantity, e.g. amount, of input material (e. g. recycled or bio-based or bio-based materials) throughout the production network and allows for attribution to output materials. Materials with different sets of specified characteristics may be mixed. E. g. recycled or bio-based feedstock replaces an equivalent quantity of fossil feedstock at the beginning of the value chain (input material) and is attributed to a product (output material) in such a manner that the input and output match. For this model, the proportion of the input with specified characteristics might only match the initial proportions on average and will typically vary across different outputs. This means that e.g. renewable and fossil input materials are mixed and that the chemical or technical proportions in each output material are not tracked.

Mass balance may include conversion factors to ensure the quantity of input material is correlated with the quantity of output material. The calculation may be made over a pre-defined or specified time period. Mass balance may be based on a environmental unit such as mass, energy or carbon.

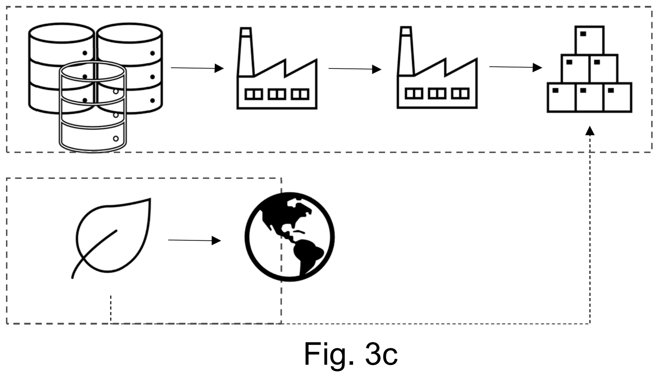

Like Fig. 3b, Fig. 3c illustrates a complex production network associated with a book and claim scheme. **In** book and claim scheme, the characteristic renewable or recycled input material is not linked to the actual material flows. Book & Claim allows to de-couple specific characteristic, such as renewable, from the physical product and to transfer the characteristic separately via a dedicated registry in the form of a digital asset. This approach may be used for renewable energy. Book and claim may be based on a book and claim accounting unit such as watts or kilowatts for electricity.

**In** identify preservation models or segregated approaches as illustrated in Fig. 3a renewable, recycled or bio-based input materials may not be mixed with fossil input material. In mass balance or book and claim approaches as illustrated in Figs. 3b and 3c renewable or recycled or bio-based materials with fossil input material may be mixed. In view of the increasing number of different sources for more sustainable chemical production and the number of attribution schemes, an efficient and robust operation system for operating complex production networks like chemical production networks is required.

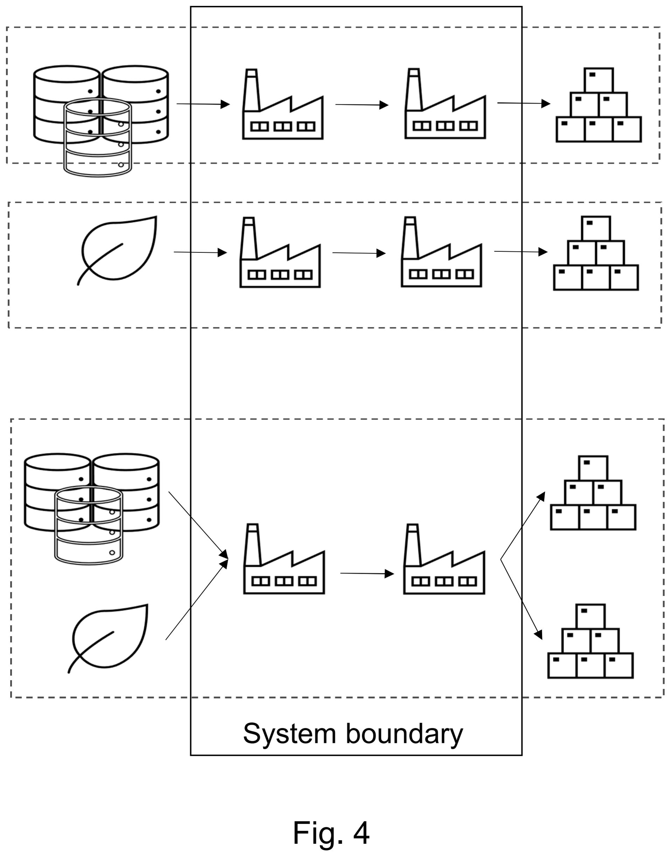

Figure 4 illustrates an example of a chemical production network including metadata structure.

The chemical production network may include multiple production chains with different attribution schemes. The production chains may be signified by the material output(s) produced via such production chains. The production chain logic may include process data associated with process steps from input material(s) to output material(s). For each production chain an attribution scheme may be applicable or assign to. **In** addition for each production chain a balancing system may be applicable or the production chain logic may be embedded in the attribution rules.

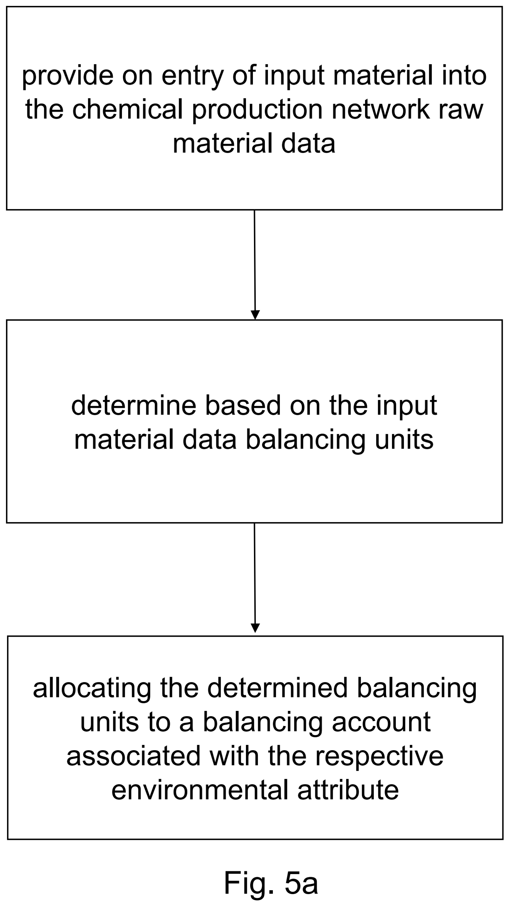

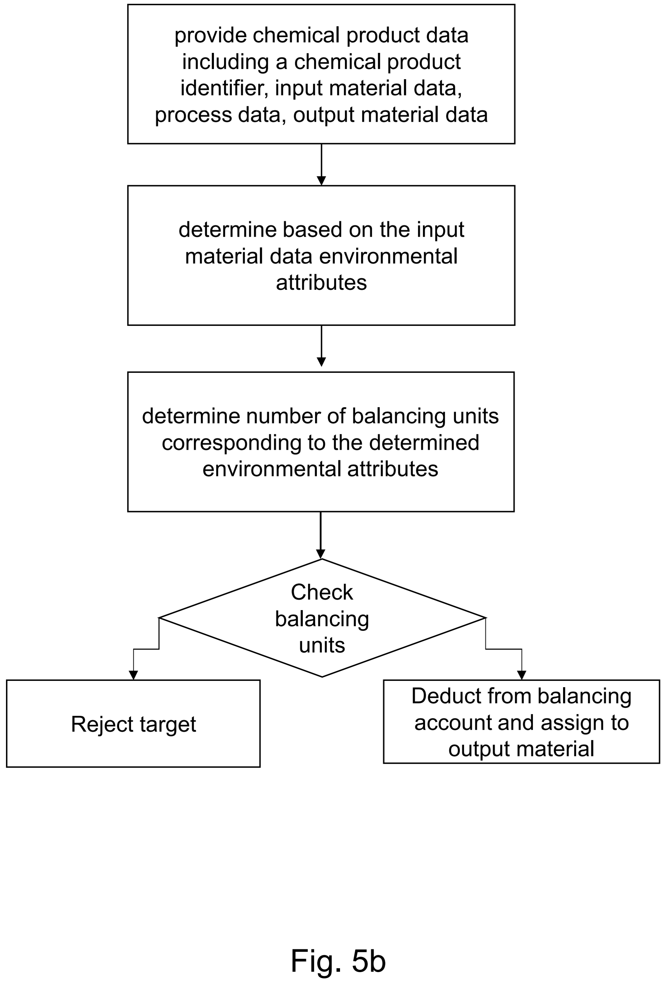

Figures 5a,b illustrate inbound and outbound attribution of environmental attributes for a chemical production network.

Fig. 5a illustrates an example of an inbound attribution process for the chemical production network.

As for example illustrated in Fig. 1 the chemical production network may be operated by the operating system configured to register inbound environmental attributes, to assign outbound environmental attributes and/or to manage inbound registration as well as outbound assignment via attribution rules. The attribution rules may include attribution schemes as illustrated in Figs. 3a-c. The chemical production network may include the network as illustrated in Fig. 2.

On input material(s) entering the chemical production network or the physical system boundary of the chemical production network the inbound attribution takes place. **In** this context input material signifies any material that enters the system boundary of the chemical production network and is used to produce output materials leaving the chemical production network. Such input material(s) may be associated with an input material identifier. Possible identifiers include decentral identifiers, input material specification, input material order number, input material LOT number, input material batch number, input material supplier specification or combination thereof.

On entry of the input material into the chemical production network input material data may be registered. The input material data may include input material identifier, input material quantity, e.g. amount and/or one or more environmental attribute(s) associated with the input material.

Based on the input material data, in particular the input material quantity, e.g. amount, and/or one or more environmental attribute(s) associated with the input material, environmental units may be determined by converting the input material quantity, e.g. amount, to environmental units for the respective environmental attribute. The environmental units may relate to carbon atoms, methane equivalents, or any other suitable measure for the environmental impact of the environmental attribute. For example, the conversion to environmental units may include the conversion of the input material quantity to an energy property including material losses that occur during production of output product(s).

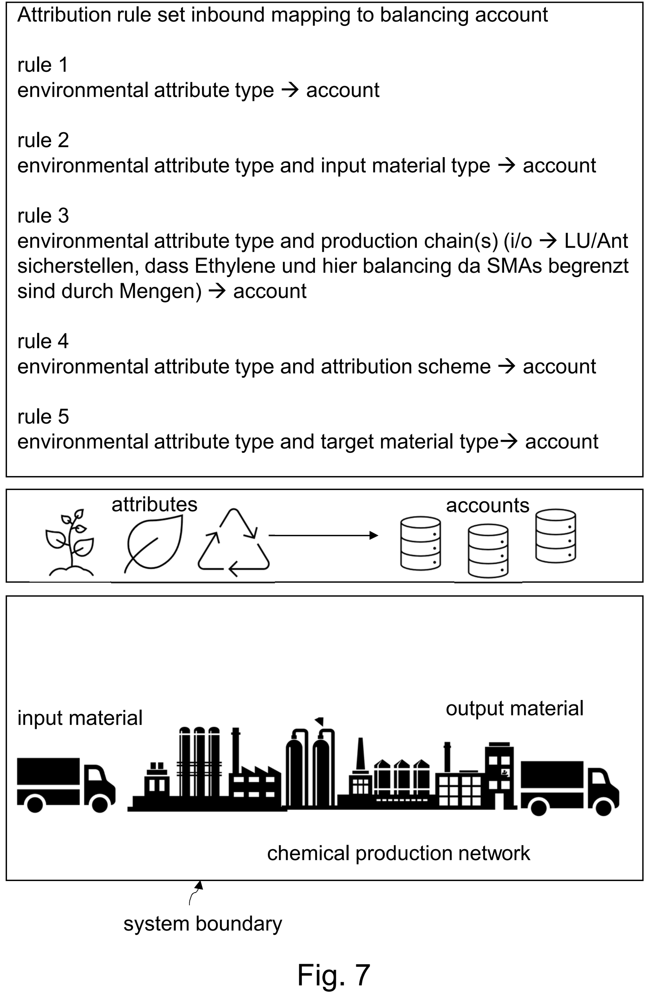

The environmental units may be attributed to a balancing account associated with the respective environmental attribute. This way the environmental attributes associated with input material(s) entering the chemical production network can be tracked or stored in an accounting system. An example of an accounting system is shown in Figs. 7a-d, where each balancing account is associated with metadata signifying the input material such as pyrolysis oil, environmental attribute type such as recycled material and material origin such as recycled from tires. For attribution the input material data may include respective metadata for the input material. Attribution rules may include instructions to allocate the environmental attribute(s) included in the input material data to the respective balancing account. In the inbound process such attribution rules may be used to allocate environmental attributes from the input material data to the balancing system.

For example the method for attributing environmental units may be associated with pyrolysis oil as input material to a complex chemical production network to the output products of the complex chemical production network.

In a first step the quantity and type of waste is provided to a computing interface. The quantity and type of waste are stored in connection with the pyrolysis plant(s) and pyrolysis oil produced by plant. For instance, a pyrolysis oil producer may operate multiple plants and may track the quantity and type of waste fed to the plants. The waste may be provided separately according to type of waste or the waste may be mixed. Based on such tracking the quantity of pyrolysis oil and type of waste may be attributed to the produced pyrolysis oil.

In a second step the quantity of pyrolysis oil and the type of waste may be provided to a second computing system associated with the operating system of a complex chemical production network. Based on the quantity of pyrolysis oil environmental units may be generated. Such generation may include a conversion factor that takes account of the chemical difference between fossil-based input materials such as naphtha and methane. In one example the conversion factor may relate to the lower heating value of the pyrolysis oil in relation the lower heating value of naphtha or methane. The conversion factor may for instance include the ratio of the lower heating value of pyrolysis oil and naphtha or methane. This way the chemical difference between the fossil and the recycled input material can be taken into account. Pyrolysis oil may be mixed with fossile input material and the fraction of pyrolysis oil may be registered in the account for balancing environmental units.

The environmental units may be attributed to the respective balancing account. For example the attribution rule may be associated with balancing account 1 of Fig. 5. In such a case the environmental units for the pyrolysis oil produced from waste of the waste type and used in a specified quantity in the production network will be attributed to balancing account 1. On production of the output products such environmental units may be attributed to the output material according to the attribution rule. An attribution rule that specifies free attribution between production processes of the chemical production network provides for reliable attribution in complex production networks.

Fig. 5b illustrates an example of an outbound attribution process for the chemical production network.

As for example illustrated in Fig. 1 the chemical production network may be operated by the operating system configured to register inbound environmental attributes, to assign outbound environmental attributes and/or to manage inbound registration as well as outbound assignment via attribution rules. The attribution rules may include attribution schemes as illustrated in Figs. 3a-c. The chemical production network may include the network as illustrated in Fig. 2.

The output material may be produced from input material that entered the chemical production network. Output material data including an output material identifier may be provided. The output material data may further include input material data associated with the input materials used to produce the output material, process data associated with the production chain for producing the output materials and/or output material data associated with the output materials, such as an output material specification or an output material quantity, e.g. amount.

Based on the input material data environmental attributes associated with the input material(s) used to produce the output material may be determined. The input material data may specify the total quantity of input material(s) that entered the production chain for producing the quantity of output material. The input material data may further specify the environmental attributes available for the respective input material(s). From the total quantity of input material(s), the number of environmental units for respective environmental attributes available for such input material(s) may be determined. This way the maximum number of environmental units for the respective environmental attribute attributable to the output material may be determined.

Based on the environmental attribute(s) attributable to the output material, the number of environmental units corresponding to the determined environmental attributes may be determined. The determined environmental units may be compared to environmental units stored in balancing account(s) for the respective environmental attribute(s).

If the balance of the respective balancing account(s) for the respective environmental attribute(s) is not sufficient, the environmental attribute(s) is rejected. If the environmental units are available, the environmental units are deducted from the respective balancing account(s) and the environmental attribute(s) are assigned to the output material and

An example of an accounting system is shown in Figs. 7a-d, where each balancing account is associated with metadata signifying the input material such as pyrolysis oil, environmental attribute type such as recycled material and material origin such as recycled from tires. For assignment of the environmental attribute(s) to the output material, attribution rules may be defined. Attribution rules may include instructions to assign the environmental attribute(s) included in the input material data from the respective balancing account to the output material(s). In the outbound process such attribution rules may be used to assign environmental attributes from the balancing system to the output material(s).

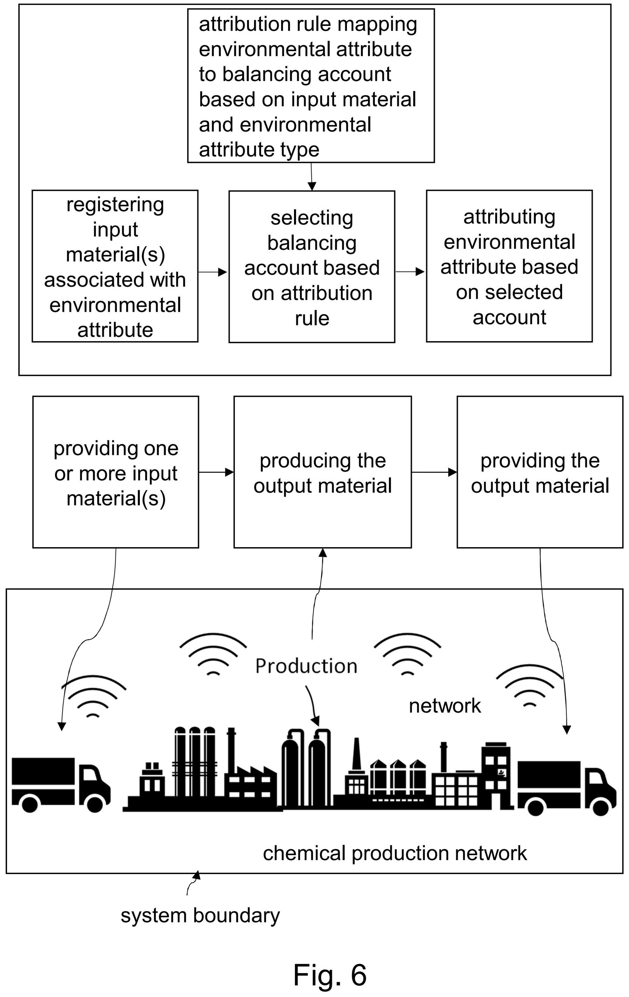

Fig. 6 illustrate an example of a method for attributing at least one environmental allocating or attribute to a balancing account based on an attribution rule.

The input materials such as pyrolysis oil, bio-naphtha or bio-gas may be provided to the chemical production network. The input materials may enter the system boundary of the chemical production network at the entry point, such as a stream cracker. The input materials may be used in the chemical production network to produce one or more output material(s) from the input materials. Output material(s) may be MDI, TDI, PA6, EPS, PC, Polyols, Caprolactam, adipic acid, HMD, Polyamides.

On entry of the input material input material data may be provided via a network to the interface of the operating system. The input material identifier associated with the respective input material, the environmental attribute associated with the respective input material and the quantity of input material provided to the chemical production network may be provided. Such data may be provided via a network on entry of the system boundary, or the data may be transferred from a computing system to the operating system.

The input material identifier may be associated with the physical entity of the input material entering the chemical production network. A tag may be placed on the delivery truck providing the input material identifier and related data. The input material identifier may be a LOT number assigned to a certain quantity or group of input material(s) and/or the material identifier relates to an order number assigned to the transfer of a certain quantity or group of input material(s) for the chemical production network. The data related to the input material identifier may include the environmental attribute associated with the respective input material, the quantity of input material and the certificate certifying the environmental attribute. The quantity of input material may be a measured quantity of input material fed to a plant or storage of the chemical production network for producing one or more output material(s) from the input material(s).

The input material identifier may be provided and the related data may be accessed via a network and retrieved from a input product system. The at least one environmental attribute and the quantity of input material provided to the chemical production network may be associated with the input material identifier and authentication information. The providing of the input material to the chemical production network may trigger generation of a transaction record assigning or attributing the input material identifier from an input material producer identifier to an input material user identifier.

The environmental attribute may be allocated or attributed to an input material account associated with the respective environmental attribute type. For allocation or attribution, attribution rules mapping the environmental attribute to the input material account may be provided. The attribution rules may depend on the input material type and the environmental attribute type. The attribution rule may be linked to meta data relating to input material type and environmental attribute type. Similarly, the input material account may be linked to meta data relating to input material type and environmental attribute type. Based on the input material type and the environmental attribute type the input material account the respective metadata may be matched and the input material account may be selected.

For the attribution or allocation, environmental units may be determined, wherein the environmental units may be equivalents in mass, in heating value, in methane, in carbon atoms or the like. For example, the quantity of input material such as pyrolysis oil may be converted to environmental units. This may include a conversion factor that takes account of the chemical difference between fossil-based input materials such as naphtha and methane and non-fossil-based input materials such as bio-naphtha or pyrolysis oil. In one example the conversion factor may relate to the lower heating value of the pyrolysis oil in relation the lower heating value of naphtha or methane. The conversion factor may for instance include the ratio of the lower heating value of pyrolysis oil and naphtha or methane. This way the chemical difference between the fossil and the recycled input material can be considered.

The environmental units may be attributed or allocated to the selected input material account. For example, the attribution rule may be associated with account for pyrolysis oil. On production of the output products corresponding environmental units may be assigned to the output material. An attribution rule may specify assignment of environmental units to the output material.

Fig. 7 illustrate examples of attribution rules for attributing at least one environmental allocate attribute to a balancing account.

Possible inbound attribution rules 1 to 5 mapping environmental attributes to input material accounts are illustrated in Fig. 7. The attribution rule may depend on the environmental attribute type such as recycled input material. The attribution rule may depend on the environmental attribute type such as recycled input material and the input material type such as recycled input material and pyrolysis oil based on plastics waste. The attribution rule may depend on the environmental attribute type such as recycled input material and production chain such as the ethanol production chain. The attribution rule may depend on the environmental attribute type such as recycled input material and the attribution scheme such as mass balance with and without free attribution. The attribution rule may depend on the environmental attribute type such as recycled input material and the target material type such as polyurethane.

Based on such attribution rules the environmental attributes registered on entry to the system boundary may be attributed or allocated to respective input material accounts. Environmental attribute types may include bio-based, recycled, renewable or the like.

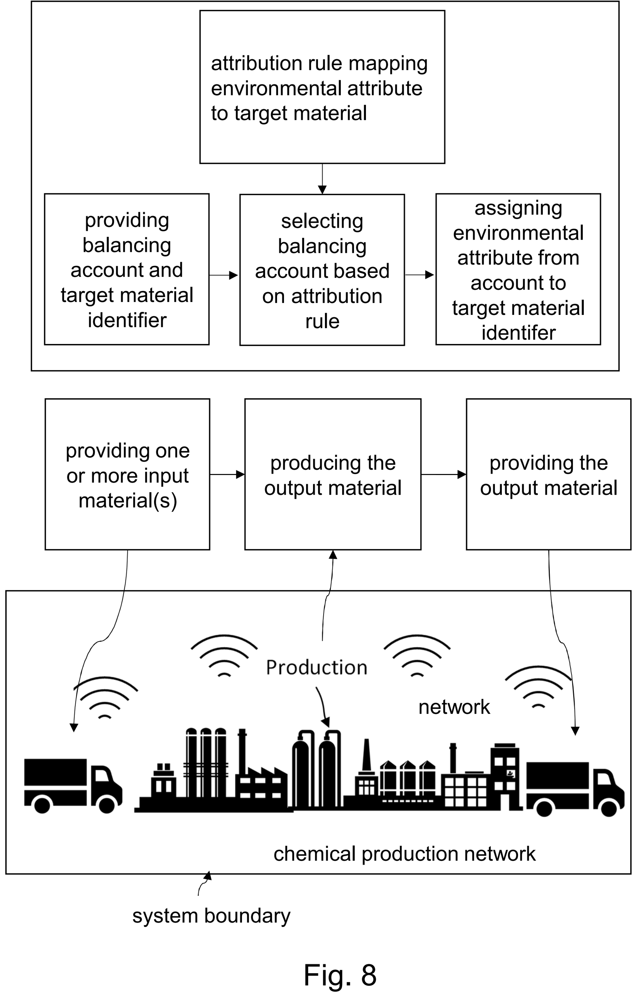

Fig. 8 illustrate an example of a method for assigning or attributing at least one environmental attribute to a target material id based on an attribution rule.

Similar to Fig. 7 the input materials are provided to the chemical production network and output materials are produced by the chemical production network. On registration of the input materials environmental attributes associated with the input materials are attributed to the input material accounts as described herein and in the context of Fig. 5. The input material accounts, the target material identifier associated with the target material and the target environmental attribute may be provided. The target material attribute may comprise one or more environmental attribute type(s). The target material attribute may comprise different numbers of environmental unit(s) for respective environmental attribute type(s).

Based on the target material identifier and the target environmental attribute the attribution rule may be provided. The attribution rule may map the environmental attribute type to the target material type. For example the attribution rule may include metadata related to the environmental attribute type and to the target material type. Similarly, the input material account may include metadata related to the environmental attribute type and to the target material type. Based on the matching of metadata the input material account may be selected. This way the account for attributing environmental attributes from account to the target material identifier may be determined.

The respective environmental attributes from the input material account may be assigned to the target material. On production of the target material corresponding environmental units may be assigned to the target material.

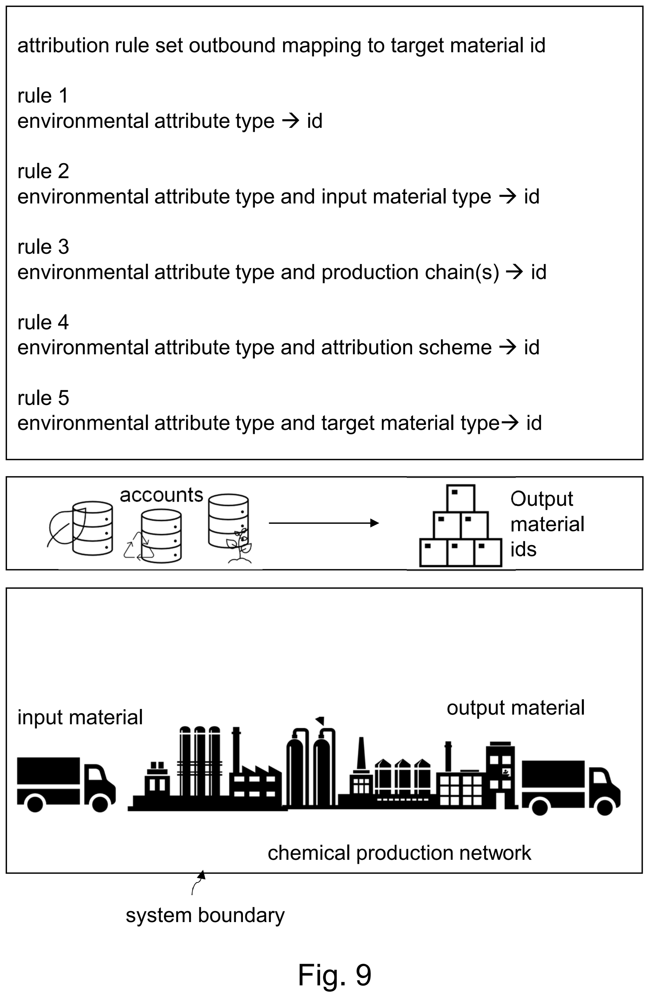

Fig. 9 illustrate examples of attribution rules for assigning or attributing at least one environmental attribute to a target material id based on an attribution rule.

Possible outbound attribution rules 1 to 5 mapping environmental attributes from input material accounts to target material are illustrated in Fig. 9. The attribution rule may depend on the environmental attribute type such as recycled input material. The attribution rule may depend on the environmental attribute type such as recycled input material and the input material type such as recycled input material and pyrolysis oil based on plastics waste. The attribution rule may depend on the environmental attribute type such as recycled input material and production chain such as the ethanol production chain. The attribution rule may depend on the environmental attribute type such as recycled input material and the attribution scheme such as mass balance with and without free attribution. The attribution rule may depend on the environmental attribute type such as recycled input material and the target material type such as polyurethane.

Based on such attribution rules the environmental attributes registered on entry to the system boundary and provided by the input material accounts may be assigned to respective target materials. Environmental attribute types may include bio-based, recycled, renewable or the like.

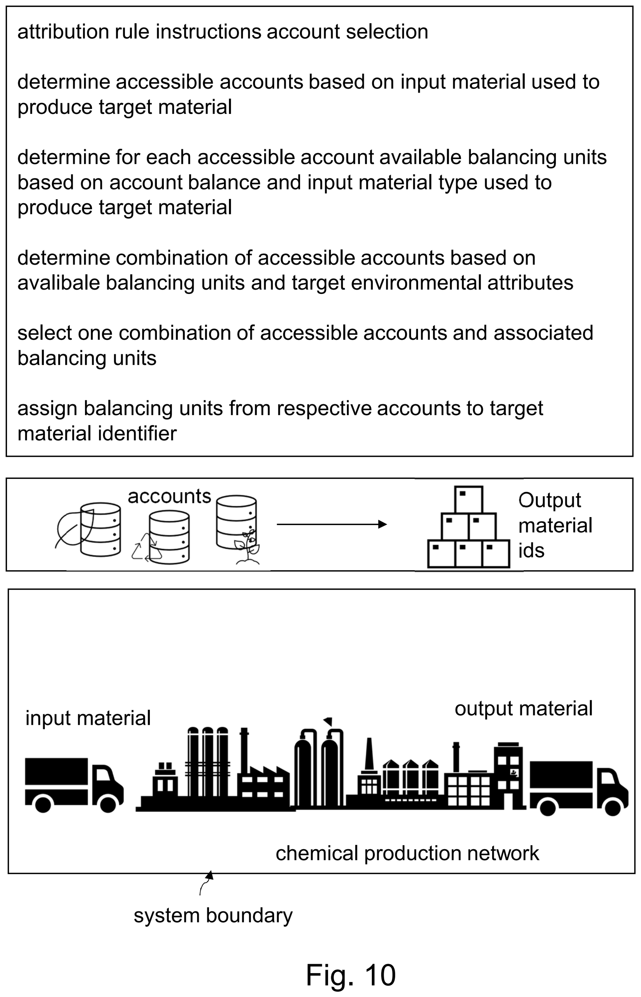

Fig. 10 illustrate examples of attribution rule instructions for selecting at least one account.

Similar to Figs. 7 and 8, the input materials are provided to the chemical production network and output materials are produced by the chemical production network. On registration of the input materials environmental attributes associated with the input materials are attributed to the input material accounts as described herein and in the context of Fig. 5.

Fig. 10 illustrates attribution rule instructions configured to select an account. Depending on the target material and the input materials such target material is produced from different input material accounts may be accessible for the target material. The input materials may be determined from a bill of materials including the recipe for the production chain up to the target material. The production chain may include the input materials that enter the system boundary of the chemical production network at any stage. From the input materials used to produce the target material the accessible accounts associated with such input material types may be determined.

For each accessible account accessible environmental units may be determined from the account balance and the input material type used to produce target material. Such determination may result in one or more accounts being accessible for the target material and the target environmental input. For example, the target environmental attribute may refer to pyrolysis oil irrespective of the waste stream. The input material account for pyrolysis oil from different waste streams may hence be accessible accounts. The depending on the respective account balance one or more combinations of accounts may fulfil the input material account. One combination of accessible accounts may be selected for example based on the combination with the highest account balance in respective accounts. This way the environmental attributes required by other stricter target environmental attributes may still be fulfillable.

On providing the target material the environmental units from the respective account(s) may be assigned to the target material identifier. This way the target material can be uniquely associated with the target environmental attribute via the target material identifier.

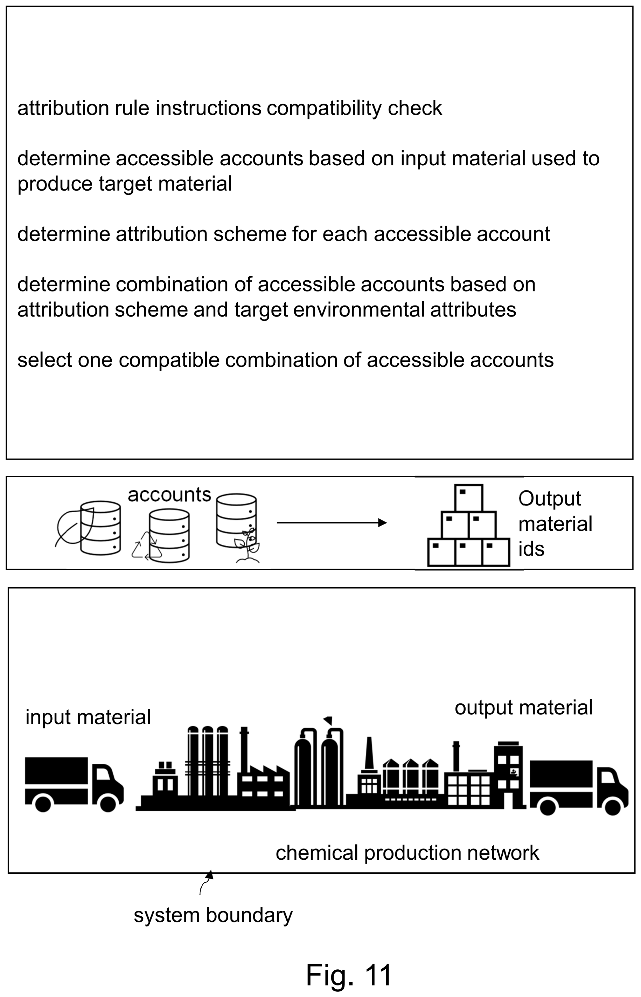

Fig. 11 illustrate examples of attribution rule instructions for compatibility check of accounts.

Similar to Figs. 7, 9 and 9, the input materials are provided to the chemical production network and output materials are produced by the chemical production network. On registration of the input materials environmental attributes associated with the input materials are attributed to the input material accounts as described herein and in the context of Fig. 5.

Fig. 11 illustrates attribution rule instructions configured to check compatibility between attribution schemes. Depending on the accounts accessible to accommodate the target environmental attribute different attribution schemes may apply. For instance, one account may be associated with a book and claim scheme, while another account may be associated with a segregated scheme. Further for instance, one account may be associated with a mass balance scheme, while another account may be associated with a segregated scheme. Further for instance, one account may be associated with a mass balance scheme with free attribution, while another account may be associated with a mass balance scheme without free attribution. The different attribution schemes may be mutually exclusive. The different attribution schemes may be compatible with each other in the sense that environmental units from first account associated with a first attribution scheme may be combined with environmental units from a second account associated with a second attribution schemes and vice versa. The different attribution schemes may be compatible with each other in the sense that environmental units from first account associated with a first attribution scheme may only be combined with environmental units from a second account associated with a second attribution schemes. A reverse combination may be excluded. Similarly, the attribution rule associated with the target environmental attribute may be compatible or not compatible with the accounts. Compatibility rules specifying the compatibility of different attribution schemes associated with respective accounts may be provided from a data base. Compatibility rules specifying the compatibility of different attribution schemes associated with respective accounts may relate to accounts and/or the target environmental attribute. The target environmental attribute and/or the accounts may include respective metadata specifying the attribution scheme. Depending on such compatibility rules the compatible combination of accessible accounts and/or target environmental attribute may be determined by matching the metadata. This way it can be ensured that the target environmental attribute includes only compatible environmental attributes.

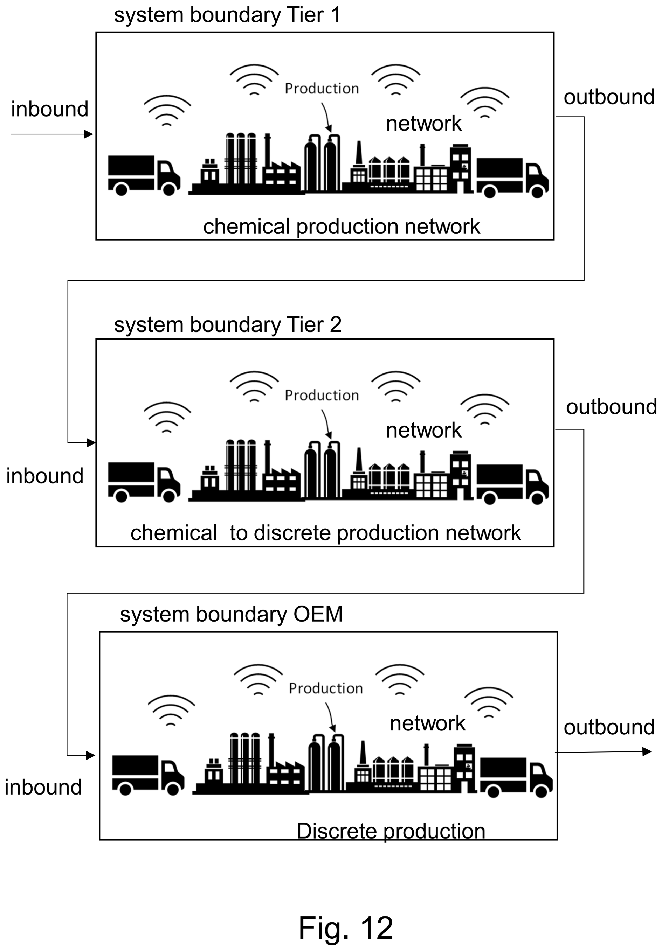

Fig. 12 illustrates an example of a method for producing at least one output material associated with at least one environmental attribute in a supply chain.

The example of Fig. 12 illustrates two tiers and an original equipment manufacturer. Tier 1 may be a chemical producer operating the chemical production network. The chemical production network may be associated with a system boundary. The system boundary may signify the physical boundary of the chemical production network. The input material(s) entering the chemical production network at any stage of the production network or the system boundary of the chemical production network may signify entry points to the chemical production network. On entry of input material(s) associated with one or more environmental attributes the environmental attribute(s) may be decoupled from the physical material flow of the input material(s) through the chemical production network. Such separation of the physical input material and the virtual environmental attribute may be provided by the method for registering at least one input material associated with at least one environmental attribute as described herein and as for example illustrated in Figs. 5a (inbound). Output material(s) may be produced from input material(s) by the chemical production network. At least one output material may be produced by the chemical production network and the output material may be linked to at least one environmental attribute as described herein and illustrated in Figs. 5b (outbound).

The output material(s) associated with at least one environmental attribute as produced by the chemical production network may be provided to the next tier. In the illustrated example tier 2 may be a production network producing discrete products from output material(s) or chemical products. Discrete products may be any products associated with a distinct physical unit. Discrete manufacturing in contrast to process manufacturing use such discrete products to assemble other discrete products. Chemical production in contrast uses process manufacturing where input material(s) are mixed and chemically converted to chemical output product(s). Such output product(s) are output material(s) that may be transferred in discrete units, such as containers or wreath. The output material(s) are such are however no discrete product(s). The chemical to discrete production network may be associated with a system boundary as described above. Similar to the chemical production network the chemical to discrete production network may on inbound register input material(s) associated with at least one environmental attribute, which may be the output material(s) of the chemical production network as described herein or illustrated in Figs. 5a (inbound). Discrete output product(s) may be produced by the chemical to discrete production network. At least one discrete output product may be linked to at least one environmental attribute (outbound).

The discrete product(s) associated with at least one environmental attribute as produced by the chemical to discrete production network may be provided to an original equipment manufacturer producing end products. As described herein and in the context of Figs. 5a and 6, the discrete product(s) and associated environmental attribute(s) may be decoupled on registration (inbound). As described herein and illustrated in Figs. 5b and 7 after decoupling the environmental attribute may be linked to the end product as described herein and illustrated in Figs. 5b (outbound).

This way the environmental attributes associated with any input material(s) may be tracked through the value chain up to the end product. The methods, apparatuses and systems described herein enable transparency from early stages of the value chain on chemical product level to end stage of the value chain on end product level. Through linking of physical material and environmental attribute environmentally friendly products and more sustainable production can be made transparent and tracked.

## Claims

1. A computer-implemented method for assigning or attributing at least one environmental attribute associated with input material(s) to target material(s), wherein the target material(s) are produced by a chemical production network using at least one of the input material(s), the method comprising:
- providing at least one target material identifier associated with the target material(s) and at least one target environmental attribute,
- providing at least one account for balancing environmental attributes and at least one attribution rule for attributing environmental attributes to target material(s), wherein the environmental attributes are associated with the input material(s) and wherein the at least one attribution rule includes instructions determining the at least one environmental attribute(s) accessible for the target material(s) based on the input material(s) used to produce the target material(s), the quantity of the input material(s) used to produce the target material(s), the one or more environmental attribute(s) associated with the input material(s) used to produce the target material(s) or combinations thereof,
- based on the at least one target material identifier and the at least one target environmental attribute selecting at least one of the attribution rules,
- determining via the at least one attribution rule at least one of the accounts for attributing one or more environmental attribute(s) from the at least one account to the at least one target material identifier,
- assigning or attributing the one or more environmental attribute(s) from the at least one account for balancing environmental attributes to the at least one target material identifier.

2. The method of claim 1, wherein the at least one attribution rule includes instructions determining a validity date of the environmental attribute(s) to be attributed to the target material(s).

3. The method of claim 1 or 2, wherein the at least one attribution rule depends on a target material type and an environmental attribute type, wherein at least one of the accounts for balancing one or more environmental attributes and environmental units to be transacted from the at least one account to the at least one target material identifier are determined via the at least one attribution rule.

4. The method of any of the preceding claims, wherein the at least one attribution rule includes instructions to determine one or more account(s) accessible for the at least one target material and/or one or more environmental unit(s) accessible for the target material(s).

5. The method of any of the preceding claims, wherein the attribution rule includes instructions to determine - based on the target material(s) - input material(s) used to produce the target material(s) and one or more accessible environmental attribute(s) associated with one or more of the input material(s).

6. The method of any of the preceding claims, wherein input material(s) used to produce the target material(s) include input material(s) associated with the environmental attribute(s) and input material(s) not associated with the environmental attribute(s), wherein the environmental attribute(s) are decoupled from the material flow through the chemical production network by attribution to the at least one account for balancing the environmental attributes.

7. The method of any of the preceding claims, wherein the at least one account for balancing environmental attributes includes environmental attributes attributed to the at least one account on providing input material(s) associated with environmental attributes to an entry point of the chemical production network.

8. The method of any of the preceding claims, wherein the at least one attribution rule includes instructions to determine at least one combination of accounts for balancing environmental attributes and environmental units attributed to the at least one combination of accounts to reach the at least one target environmental attribute.

9. The method of any of the preceding claims, wherein the at least one attribution rule includes instructions to determine a combination of accounts for balancing environmental attributes with compatible attribution schemes.

10. The method of any of the preceding claims, wherein the at least one attribution rule includes instructions to select a combination of two or more accounts for balancing environmental attributes based on the account balances of the two or more accounts.

11. The method of any of the preceding claims, wherein the at least one attribution rule includes instructions to match metadata of the at least one account for balancing environmental attributes with target material type(s) corresponding to the target material(s) and/or instructions to match the metadata of the at least one account for balancing environmental attributes with production chain(s) producing the target material(s).

12. The method of any of the preceding claims, wherein the at least one attribution rule is associated with environmental attribute types that relate to certified or non-certified environmental attributes, environmental attribute types that relate to input material dependent environmental attributes, environmental attribute types that relate to chemical network or production chain dependent environmental attributes, environmental attribute types that relate to environmental attributes certified under specific certification schemes and/or environmental attribute types that relate to environmental attributes adhering to specific attribution schemes.

13. An apparatus for assigning or attributing at least one environmental attribute associated with input material(s) to target material(s), wherein the target material(s) are produced by a chemical production network using at least one of the input material(s), the apparatus comprising:
- a target provider configured to provide at least one target material identifier associated with the target material(s) and at least one target environmental attribute,
- a balancing module configured to provide at least one account for balancing environmental attributes,
- an attribution module configured to provide at least one attribution rule for attributing environmental attributes associated with the input material(s) to the target material(s), wherein the at least one attribution rule includes instructions determining the at least one environmental attribute(s) accessible for the target material(s) based on the input material(s) used to produce the target material(s), the quantity of the input material(s) used to produce the target material(s), the one or more environmental attribute(s) associated with the input material(s) used to produce the target material(s) or combinations thereof,
- an outbound allocator configured to
∘ **select** based on the at least one target material identifier and the at least one target environmental attribute at least one of the attribution rules,
∘ determine at least one of the accounts for assigning or attributing the one or more environmental attribute(s) from the at least one account to the at least one target material identifier via the at least one attribution rule,
∘ assign or attribute the one or more environmental attribute(s) of the input material(s) from the at least one account for balancing the environmental attributes to the at least one target material identifier.

14. A method for providing at least one target material associated with one or more environmental attribute(s) and produced by a chemical production network, the method comprising:
- producing the at least one target material from one or more input material(s) entering the chemical production network,
- assigning or attributing at least one environmental attribute associated with the input material(s) to target material identifier(s) associated with the at least one target material according to the methods of any of claims 1 to 12, and
- providing the at least one target material in association with the at least one environmental attribute.

15. An apparatus for providing at least one target material associated with one or more environmental attribute(s) and produced by a chemical production network, the method comprising:
- a chemical production network configured to produce the at least one target material from one or more input material(s) entering the chemical production network,
- an assignor configured to assign at least one environmental attribute associated with the input material(s) to target material identifier(s) associated with the at least one target material according to the methods of any of claims 1 to 12, and
- a material provider configured to provide the produced at least one target material in association with the at least one environmental attribute.
